# EUROPEAN PATENT SPECIFICATION

(11) **EP 1 052 268 B1**
(45) Date of publication and mention of the grant of the patent: **17.10.2007**
(21) Application number: 00109539.7
(22) Date of filing: 04.05.2000
(51) Int. Cl.: C08J 5/18, B41M 5/40, C08L 67/02

(54) **Microcellular polyester film**
Mikrozelluläre Polyesterfolie
Film microcellulaire de polyester

(30) Priority: 12.05.1999 JP 13115099; 05.08.1999 JP 22224499
(43) Date of publication of application: 15.11.2000
(73) Proprietor: Mitsubishi Polyester Film Corporation, Tokyo (JP)
(72) Inventor: Hibiya, Takashi, c/o Mitsubishi Polyester Film Co., Sakata-gun, Shiga-ken (JP); Miki, Takatoshi, c/oMitsubishi Polyester Film Corp, Sakata-gun, Shiga-ken (JP)
(74) Representative: TER MEER - STEINMEISTER & PARTNER GbR

(56) References cited:
- EP-A- 0 300 060
- EP-A- 0 897 947
- US-A- 5 082 730
- US-A- 5 605 737
- US-A- 5 660 931
- DATABASE WPI Section Ch, Week 199715 Derwent Publications Ltd., London, GB; Class A23, AN 1997-160480 XP002142830 & JP 09 029913 A (DIAFOIL HOECHST CO LTD), 4 February 1997 (1997-02-04)

## Description

### BACKGROUND OF THE INVENTION

The present invention relates to a microcellular polyester film. More particularly, it relates to a microcellular polyester film used as a base of image receiving paper for video printers.

White opaque polypropylene- or polyester-based biaxially stretched films have been used as a base of image receiving paper for video printers.

In manufacturing the polypropylene-based biaxially stretched films, a polypropylene resin having a large quantity of inorganic or organic particles dispersed therein is stretched to form the voids in the film which serve to better cushioning properties of the film in printing to improve its printability, running quality. The polyester-based biaxially stretched film can be also provided with the cushioning properties in the similar way, and further a coating layer (a thin adhesive layer) is formed on the surface.

The conventional base films, however, had the following defects.

The polypropylene-based biaxially stretched films tend to curl when heated in printing. Also, the polyester-based biaxially stretched films, although having high heat resistance, are tend to generate a static charge, which is a problem common to the plastic films. Static charging of the film surface gives rise to the problem that the films tend to be conveyed blocking to each other, that is, carried as a mass with one film lying over another.

As a method for affording the adhesive properties to the polyester film surface, it has been proposed and actually practiced to form a primer coat of an adhesive resin such as acrylic resin, urethane resin or polyester resin on the film surface.

For providing the antistatic properties to the film surface, the following methods are known: a low-molecular weight anionic surfactant type compound such as an organic sulphonate is incorporated in the base resin; a metallic compound is vacuum deposited on the film surface; an antistatic agent such as an anionic or cationic compound or a conductive compound is coated on the film surface.

The method in which an anionic compound is incorporated in the base resin has the advantage of low cost but involves the problem that the antistatic effect attainable with this method has a limit. Further, because of use of a low-molecular weight compound, the produced film is poor in water resistance and tends to lower in its adhesiveness with the lapse of time due to blooming and also in its antistatic performance due to transfer of the compound. Thus, this film has the problem in durability.

The method comprising vacuum deposition of a metallic compound is capable of producing an excellent antistatic performance, and this type of film is finding an expanding scope of use as a transparent conducting film in recent years. However, the deposited film is high in production cost and, although suited for certain specific uses, can hardly be utilized as a general-purpose antistatic film.

The method comprising coating with an antistatic agent is a simple method as an antistatic agent can be applied simultaneously with the said adhesive resin in the form of a mixture with this resin. Further, if an in-line coating method - a method for producing a coated biaxially stretched polyester film in which a sheet or film coated with a coating solution is stretched and heat treated - is used, it is possible to obtain a product with a large width at low cost as the film forming operation and coating can be accomplished at the same time. However, great difficulties are involved in formulation for providing a coat that can satisfy both of the requirements for easy adhesion and antistatic properties.

For example, in case of using the conductive particles such as conductive carbon, although the obtained antistatic effect is relatively good and the film can be produced at relatively low cost, this method is disadvantageous in that the produced film is low in transparency or glossiness. In the case of using a low-molecular weight anionic or cationic compound, there arise the problems of poor water resistance of the produced film, lowering of its adhesiveness with time due to blooming and the blocking tendency of the films as in the case of the compound-incorporation method.

There is known a film coated with a high-molecular weight anionic antistatic agent such as a sodium salt of polystyrenesulfonic acid. However, when a sodium salt of polystyrenesulfonic acid is applied to the coat and stretch method, the coating layer tends to become discrete and the desired antistatic effect may not be provided. Further, the coating layer tends to be cracked to vary glossiness of the film. Also, the high-molecular weight cationic antistatic agents, although having higher antistatic performance than the anionic type, are poor in thermal stability, so that when coating and stretching are performed under the ordinary conditions, volatilization or thermal decomposition tends to take place in the steps of stretching and heat treatment, making it unable to produce the expected antistatic effect.

Further, the conventional base films have the following drawbacks. Namely, thermoplastic resins which have been mainly used as raw materials of the conventional base films and are incompatible with polyesters, are deteriorated in heat stability as compared to that of polyesters. As a result, when extruded under the same conditions (ordinarily at a temperature of not less than 260°C) as used for the extrusion of polyesters, the thermoplastic resins undergo heat degradation, resulting in deteriorated whiteness of the finally obtained films. In this case, the whiteness itself of the films can be enhanced by adding a considerable amount of a fluorescent brightening agent thereto. However, since the fluorescent brightening agent is expensive, the use thereof increases the costs of raw materials.

In general, upon molding the thermoplastic resins, an antioxidant can be kneaded therewith in order to prevent the resins from being oxidized and deteriorated due to heat and oxygen. The antioxidants are generally classified into primary antioxidants exhibiting an oxidation-inhibiting effect even when used singly, and secondary antioxidants exhibiting an enhanced oxidation-inhibiting effect when used in combination with the primary antioxidants. These antioxidants have been incorporated into the thermoplastic resins by kneading the antioxidants with polyolefins, as molding materials at a predetermined mixing ratio.

Upon the production of microcellular polyester films (fine cell-containing polyester films), the resin incompatible polyester into which the antioxidant is kneaded, may be blended therein. However, this method essentially requires a step of kneading the antioxidant into the incompatible resin, resulting in increased costs of raw materials.

For simplifying the above process (i.e., for power-saving), the antioxidant may be directly charged together with the polyester and incompatible resin into an extruder. However, the simple direct addition of the antioxidant causes considerable deterioration in oxidation-inhibiting effect acting on the incompatible resin, resulting in deteriorated whiteness of the finally obtained films. Even though the amount of the antioxidant added is increased uncontrollably, the oxidation-inhibiting effect cannot be improved, and there will rather arise deficiencies such as surging in the extruder.

As a result of the present inventors' earnest studies to solve the above problems, it has been found that a microcellular polyester film having a specific coat on its surface has excellent properties and is very useful as a base film of image receiving paper for video printers. The present invention has been attained on the basis of the above finding.

### SUMMARY OF THE INVENTION

An object of the present invention is to provide a microcellular polyester film having the antistatic properties afforded thereto without affecting its innate properties, also having excellent conveyance properties and conducive to forming a beautiful high-quality image when used as a base of image receiving paper.

The other object of the present invention is to provide a microcellular polyester film having excellent whiteness even using a small amount of a fluorescent brightener, and capable of forming a beautiful high-quality transfer image in use as a base of image receiving paper.

To attain the above aim, in the present invention, there is provided a microcellular polyester film as defined in claim 1.

In the present invention, there is provided an image receiving paper for video printers as defined in claim 3 comprising the microcellular polyester film as defined in claim 1 as a base.

In the present invention, there is provided a process for producing the microcellular polyester film as defined in claim 2.

In the present invention, there is provided an image receiving paper for video printers as defined in claim 4 comprising the microcellular polyester film as defined in claim 2 as a base.

### DETAILED DESCRIPTION OF THE INVENTION

The present invention is described in further detail below.

First, the microcellular polyester film (fine cell-containing film) as defined in claim 1 is explained.

Typical examples of the polyesters usable for comprising the base film according to the present invention include polyethylene terephthalate in which not less than 80 mol% of the structural units is constituted by ethylene terephthalate, polyethylene-2,6-naphthalate in which not less than 80 mol% of the structural units is constituted by ethylene-2,6-naphthalate, and poly-1,4-cyclohexanedimethylene terephthalate in which not less than 80 mol% of the structural units is constituted by 1,4-cyclohexanedimethylene terephthalate. Among other polyesters usable in the present invention are polyethylene isophthalate and polybutylene terephthalate.

Beside the said main structural components, there can be used as other copolymer components a diol such as diethylene glycol, propylene glycol, neopentyl glycol, polyethylene glycol and polytetramethylene glycol, and an ester-forming derivative such as isophthalic acid, adipic acid, azelaic acid, sebacic acid and oxymonocarboxylic acid. The polyester used in the present invention may be a homopolymer or copolymer, or a blend with a low rate of other type of resin.

The microcellular polyester film of the present invention exhibits sufficient high-density image receivability as a base of image receiving paper for video printers , particularly as a base of image receiving paper for sublimation or melting type thermal transfer. This is credited with the cushioning and heat insulating actions of the fine air cells in the film. In order to minimize flickering of the received image and to improve the sense of fineness, the air cells in the film are preferably as small and uniform as possible in size. For obtaining such a film, a method is preferably employed in which the polyester is blended with a thermoplastic resin incompatible with the polyester while adding a pertinent amount of a surfactant, then the mixture is extruded and the obtained sheet is stretched at least in one axial direction so that the fine closed cells are formed in the film.

The "thermoplastic resin incompatible with the polyester" mentioned above designates a thermoplastic resin which, when melted and kneaded with a polyester, is not compatibilized with the polyester but is dispersed in a globular, elliptical, filiform or other similar form (forming an island-and-sea structure) in the polyester.

The content (An) of the said thermoplastic resin incompatible with the polyester, when expressed as the ratio in the whole composition, is 2 to 30% by weight, preferably 5 to 25% by weight, more preferably 10 to 20% by weight. When An is less than 2% by weight, it may prove unable to form a sufficient amount of air cells in the film to provide a desired light-weight, properly cushioned film. On the other hand, when An exceeds 30% by weight, the air cells tend to form in excess, making surface roughness of the film too high.

Examples of the thermoplastic resins incompatible with the polyesters include polyolefins such as polyethylene, polypropylene, polymethylpentene and polymethylbutene, polystyrenes, polycarbonates, polyphenylene sulfide, and liquid crystal polyesters. Of these resins, polypropylene, polymethylpentene and polystyrenes are preferred in terms of cost and productivity, polypropylene being the most preferred. In the following explanation, polypropylene is used as the representative example of the thermoplastic resins incompatible with the polyesters. However, it should be understood that the thermoplastic resins incompatible with the polyesters is not limited to polypropylene.

The said polypropylene is preferably a crystalline polypropylene polymer of which usually not less than 95 mol%, preferably not less than 98 mol% is constituted by the propylene units. Especially, crystalline polypropyrene homopolymer is preferred. In the case of non-crystalline polypropylene, it tends to exude on the non-oriented polyester sheet surface in the film forming process, causing contamination of the surfaces of the cooling drum, stretching rolls. In the case of the polypropylenes in which the proportion of other structural units than propylene units, for example ethylene units, exceeds 5 mol%, formation of the fine cells in the film tends to become insufficient.

The melt flow index (MFI) of the said polypropylenes is selected from the range of usually 1.0 to 30 g/10 min, preferably 2.0 to 20 g/10 min. When MFI is less than 1.0 g/10 min, the formed cells tend to become too large, increasing the risk of break during stretching. If the melt flow index (MFI) of polypropylene exceeds 30 g/10 min, it becomes difficult to control the density to stay uniform and there also tends to take place dislocation of the clips in the tenter (stretcher) to reduce productivity.

In the present invention, a nonionic Silicone-based surfactant as specified in claim 1 is blended in the base material for making fine and uniformalizing the size of the air cells formed in the film forming step to obtain the desired film density and cushioning properties.

The surfactant used in the present invention is the one which, in the material extruding step (melting and kneading) for obtaining the film of the present invention, acts to the interface of the polyester and another polymer, e.g. polypropylene, to enhance their compatibility, thereby producing an effect of further uniformalizing and making finer the air cells formed in the film. More specifically, organopolysiloxane-polyoxyalkylene copolymer and alkenylsiloxanes having polyoxyalkylene side chains are preferably used because of their high surface activity.

The content As (wt%) of the surfactant in the microcellular polyester film, in relation to the content An (wt%) of the thermoplastic resin incompatible with the polyester, is defined to be 0.002xAn<_As<_0.2xAn, more preferably 0.005×An≤As≤0.1×An. When As<0.002×An, glossiness of the laminated film surface may become unsatisfactory as the incompatible resin may not be dispersed with desired fineness. On the other hand, when As>0.2xAn, there can be expected no further improvement of the effect of promoting fine dispersion of the incompatible resin, and rather adverse effects on film quality, such as reduction of whiteness of the film, are liable to occur.

The apparent density (p) of the microcellular polyester film according to the present invention is 0.60 to 1.35 g/cm³, preferably 0.70 to 1.25 g/cm³, more preferably 0.75 to 1.15 g/cm³. If ρ is less than 0.6 g/cm³, frequent break of the film takes place in the film forming operation to deteriorate productivity. If ρ exceeds 1.35 g/cm³, the film deteriorates in cushioning properties, and when it is used as a base of image receiving paper for video printing, the print density may drop and the printing cost per unit area may rise up.
From the conception that the microcellular film of the present invention is purposed to obtain a beautiful image when used as a base of image receiving paper, it is preferable that the film has a high glossiness, specifically a glossiness at 60° (G₆₀) of not less than 20% as measured according to the third method of JIS Z 8741-1983. When G₆₀ is less than 20%, the image received by the film tends to lack fineness (glossy appearance). G₆₀ is more preferably not less than 30%, even more preferably not less than 40%. When G₆₀ exceeds 120%, however, the film surface becomes too flat, giving rise to such problems as blocking tendency of the film when rolled up, susceptibility to flaws, and the risk of plural sheets of image receiving paper being conveyed as a mass with one sheet lying over another.

Surface roughness Ra of the microcellular film according to the present invention is preferably 0.03 to 0.30 µm. When Ra is less than 0.03 µm, the film surface becomes too flat and there may arise the same problems as encountered when glossiness exceeds the upper limit value. On the other hand, when Ra exceeds 0.30 µm, the received image tends to lack in fineness. The more preferred range of Ra is 0.05 to 0.20 µm, even more preferably 0.07 to 0.15 µm.

From the conception to obtain the fine images in use of the microcellular polyester film of the present invention as a base of image receiving paper, it is preferable that the film is white in color and has a high degree of opacifying power. In order to afford such properties, the white inorganic particles may be contained in the film. It is also effective to concurrently use a fluorescent brightener for further elevating whiteness of the film.

The known materials such as titanium oxide, calcium carbonate, barium sulfate, can be used as the said white inorganic particles. Of these materials, small-sized particulate titanium oxide is preferred in view of image receptivity.

The crystal structure of the titanium oxide particles which can be blended in the polyester in the present invention may be either anatase type or rutile type, but the anatase type is preferred for the reasons of excellent whiteness and weather resistance of the produced film. The particle surfaces may have been treated with an oxide of aluminum, silicone, zinc and/or an organic compound for further improving dispersibility of the titanium oxide particles in the polyester and weather resistance of the produced film.

The average particle size (diameter) of the titanium oxide particles preferably falls within the range of 0.20 to 0.50 µm, more preferably 0.25 to 0.40 µm. When the average particle size is outside the above-defined range, the produced film may turn out too low in its opacifying power and tends to become incapable of sufficiently preventing transmission of light.

The amount of the titanium oxide particles to be added is usually 1 to 20% by weight, preferably 2 to 10 % by weight. When the particles are added in excess of 20% by weight, break of the film is liable to take place in the film forming procedure, and also the produced film tends to deteriorate in mechanical strength.

In the present invention, it is possible to use any type of fluorescent brightener as far as it has a peak of fluorescence at a wavelength of 400 to 700 nm, but the following commercial products are cited as preferred examples: Uvitex OB (Ciba-Specialty Chemicals), OB-1 (Eastman Chemical) and Mikawhite (Nippon Kayaku/Mitsubishi Chemical). The content of the fluorescent brightener in the polyester film is usually 50 to 5,000 ppm, preferably 100 to 3,000 ppm. When its content is less than 50 ppm, the produced film tends to lack whiteness, and when its content exceeds 5,000 ppm, heat deterioration may occur in the kneading step by an extruder or other means when the brightener is blended in the polyester.

Regarding whiteness of the microcellular polyester film of the present invention, the "b" value defined by JIS Z-8722 and Z-8730 can be used as an index. Specifically, it is preferable that the "b" value determined with a 5-piece stack of the film falls within the range of +1.0 to -10. When the "b" value is more than +1.0, the film assumes a strong yellowish tint, which tends to impair the sense of fine quality of (the received image on) the film as an image receiving paper base. On the other hand, when the "b" value is less than -10, the film has a bluish tint, which tends to cause a change in coloration of the received image. The more preferred range of "b" value is from -3.0 to -10, even more preferably from -4.0 to -8.0.

A coating layer is provided on at least one side of the microcellular polyester film of the present invention. It is essential that the surface resistivity of the coated side of the film is not more than 1 × 10¹² Ω. The surface resistivity is preferably not more than 1 × 10¹⁰ Ω, more preferably not more than 1 × 10⁹ Ω.

In the present invention, such a coating layer may be provided either on one side alone or on both sides of the polyester film, but it is preferred to apply an antistatic coating on both sides of the film for eliminating the blocking tendency of the image receiving paper for video printer.

The composition of the said coating layer is not restricted in so far as it meets the said specific requirement for surface resistivity (not more than 1 × 10¹² Ω), but, for instance, the coating layer may be formed with a coating solution comprising the following composition: (a) a polymer having a pyrrolidium ring on the backbone, (b) at least one type of polymer selected from polyester, polyacrylate, polyurethane and chlorine-containing polymer, and (c) a melamine-based and/or epoxy-based crosslinking agent.

The said polymer having a pyrrolidium ring on the backbone, which constitutes a component of the coating composition, is a polymer having a basic structure represented by the following formulas (I) or (II):

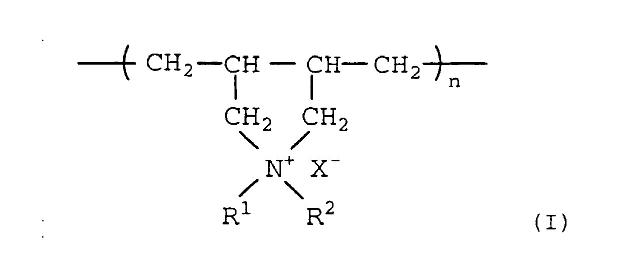

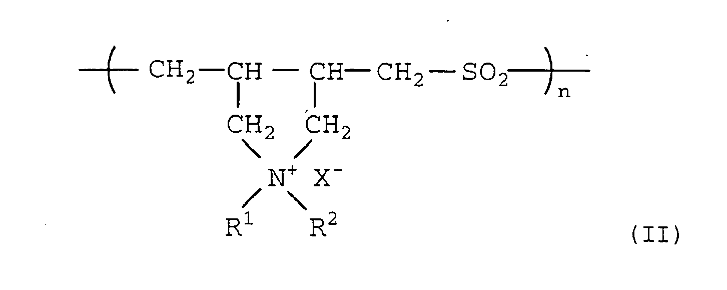

In the above formulas (I) and (II), R¹ and R² represent independently an alkyl group, a phenyl group, and these alkyl group, phenyl group, may be substituted with a group such as mentioned below; and n indicates the degree of polymerization.

The substituting groups usable in the present invention include, for example, hydroxyl, amide, lower carboalkoxyl, lower alkoxyl, thiophenoxyl, cycloalkyl and tri-(lower alkyl)ammonium lower alkyl. Nitro group is substitutable only on the alkyl group. Halogen group is substitutable only the phenyl group. R¹ and R² may be chemically bonded to each other, and they represent, for example, (CH₂)m (m: an integer of 2 to 5), -CH(CH₃)-CH(CH₃)-, -CH=CH-CH=CH-, -CH=CH-CH=N-, -CH=CH-N=CH-, (CH₂)₂O(CH₂)₂ or (CH₂)₂O(CH₂)₂. In the above formulas (I) and (II), X⁻ represents an inorganic acid residue such as Cl⁻, Br⁻, 1/2SO₄²⁻ or 1/3PO₄³⁻ or a sulfonic acid residue such as CH₃SO₄- or C₂H₅SO₄⁻.

A polymer represented by the formula (I) used in the present invention can be obtained, for example, by subjecting a compound represented by the following formula (III) to cyclic polymerization using a radical polymerization catalyst.

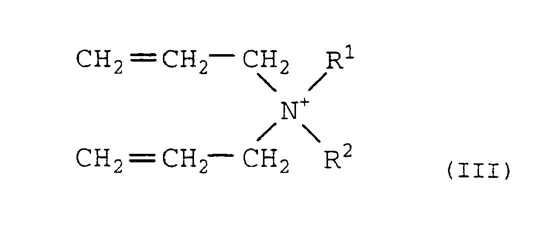

A polymer of the formula (II) can be obtained by subjecting a compound of the formula (III) to cyclic polymerization in a system using sulfur dioxide as solvent. Polymerization can be accomplished according to a known method, for instance, in a solvent such as water or a polar solvent such as methanol, ethanol, isopropanol, formamide, dioxane, acetonitrile or sulfur dioxide, using a polymerization initiator such as benzoyl peroxide or tertiary butyl peroxide.

The polymer having a pyrrolidium ring on the backbone used in the present invention may have as a copolymer component a compound having unsaturated carbon-carbon bonds polymerizable with the compound of the formula (III).

The molecular weight of the polymer having a pyrrolidium ring on the backbone is preferably 500 to 1,000,000, more preferably 1,000 to 500,000. When the molecular weight of the said polymer is less than 500, the produced film, although having an antistatic effect, tends to be weak in coating strength or to have a blocking tendency. When the polymer molecular weight is more than 1,000,000, the viscosity of the coating solution elevates to adversely affect its handling quality and coating properties.

The polyester, polyacrylate, polyurethane and chlorine-containing polymer used as the coating layer components in the present invention are not specified; it is possible to use those commonly used in the coating materials. For example, polyvinylidene chloride, polyvinyl chloride, chlorinated polyolefins, vinyl chloride-vinyl acetate copolymer, chloroprene can be used as the chlorine-containing polymer.

These polymers can be dispersed in water by making them hydrophilic by copolymerizing the nonionic, cationic or ampholytic hydrophilic substance used as a monomer component. Such water dispersion of the polymers can also be effected by so-called forced emulsification using a nonionic, cationic or ampholytic surfactant, or by means of emulsion polymerization using a nonionic, cationic or ampholytic surfactant.

These polymers can be used in the form of a copolymer, either random, block or graft, or as a combination with other type of polymer. For instance, it is possible to use a polyurethane- or polyester-grafted polyacrylate obtained by emulsion-polymerizing an acrylic monomer in the presence of an aqueous solution or water dispersion of a polyurethane or polyester.

As the melamine-based crosslinking agent in the present invention, there can be used methoxymethylated melamine, butoxymethylated melamine which are the alkylolated or alkoxyalkylolated melamine compounds. The compounds obtained by co-condensing urea with part of the melamine compound are also usable.

As the epoxy-based crosslinking agent, it is possible to use any compound having an epoxy group which is soluble in water or has a water solubilization rate of not less than 50%.

Addition of a crosslinking agent contributes to the improvement of solidness, water resistance, solvent resistance and mechanical strength of the coat. This produces an antistatic effect even on the top coat. Further, in addition to the improvement of adhesiveness to the top coat, quite surprisingly the antistatic properties of the film are also improved. It is also notable that a melamine-based crosslinking agent is quick to cure, and joint use with a curing catalyst such as protonic acid or its ammonium salt can produce an even higher effect.

The amount of the polymer having a pyrrolidium ring on the backbone blended in the coating solution for forming a coating layer is usually 5 to 50% by weight, preferably 10 to 40% by weight. If the amount of the said polymer blended is less than 5% by weight, there may not be obtained the satisfactory antistatic properties after application of the image receiving layer described later. Use of the present polymer in excess of 50% by weight may deteriorate adhesion to the image receiving layer.

The total amount of at least one type of polymer selected from polyester, polyacrylate, polyurethane and chlorine-containing polymer blended in the coating solution in the present invention is usually 30 to 90% by weight, preferably 40 to 80% by weight. If the amount of the said polymer blended is less than 30% by weight, satisfactory adhesion to the image receiving layer may not be obtained, while use of the said polymer in excess of 90% by weight may not be attained the satisfactory anti-block properties.

The total amount of the melamine- and/or epoxy-based crosslinking agent(s) blended in the coating solution is usually 5 to 45% by weight, preferably 10 to 40% by weight. When the amount is less than 5% by weight, the intended effect of improving antistatic and anti-block properties may not be obtained, and when the amount exceeds 45% by weight, no satisfactory adhesiveness to the image receiving layer may be provided.

In the present invention, a lubricant may be further contained in the coating layer to provide lubricity and a moderate degree of releasability. Polyolefinic waxes, mineral oils, animal and vegetable oils, waxes, esters, metallic soap can be used as lubricant, but usually polyolefinic waxes are used because they have no deterioration of adhesiveness.

Where necessary, the coating layer of the film according to the present invention may also contain other additives such as defoaming agent, coating properties improver, thickener, inorganic particles, organic polymer particles, antioxidant, ultraviolet absorber, foaming agent and colorant.

In use of the coated biaxially stretched white polyester film of the present invention as a base film for video printers, usually an image receiving layer comprising a subliming type dye is provided on the film. Generally the image receiving layer comprises a polyester resin, polyurethane resin, polyamide resin, vinyl chloride resin or a mixture or copolymer of these resins, and if necessary, may contain a wax, a releasability improver such as silicones, and inorganic particles such as silica particles.

The microcellular film of the present invention may not necessary be a single-layer film; it may have a multi-layer structure with two or more layers comprising different blends of materials. The film is formed generally by a process comprising the steps of melting and extruding the polymers blended according to a predetermined formulation, and stretching the extrudate in at least one axial direction by a preferable method such as roll stretching or tentering. In order to form the fine air cells in a preferable way and to provide an appropriate film strength and dimensional stability, it is preferable to conduct biaxial stretching followed by a heat treatment.

Here, an example of film forming process involving biaxial stretching is explained.

Basically the layer structure is single layer, B/A indicating 2 layers of 2 different types of material or B/A/B, which indicates that the structure comprising 3 layers of 2 different types of material. If desired, the structure may have a more number of layers. First, the materials of the formulations for the respective layers are supplied to the corresponding extruders, melted and kneaded in the respective extruder lines, and then led into a die usually through a multimanifold or feed block.

The molten sheet extruded from the die is rapidly cooled to a temperature below the glass transition point on a rotary cooling drum and thereby solidified to obtain a non-oriented sheet which is substantially in an amorphous state. In this operation, it is preferable to enhance adhesion between the sheet and the rotating cooling drum for improving flatness of the sheet and the sheet cooling effect. For this purpose, the electrostatic pinning technique is preferably used in the present invention.

The thus obtained sheet is then stretched biaxially to produce a film. The fine cells contained in the polyester film of the present invention are formed by the such stretching.

In this operation, the non-stretched sheet is first stretched in one direction (in the machine direction) at usually 70 to 150°C, preferably 75 to 130°C, for a stretch ratio of usually 2.5 to 6.0 times, preferably 3.0 to 5.0 times. A roll or tenter type stretching machine can be used for the said stretching. Then the sheet is stretched in the direction (in the transverse direction) orthogonal to the initial stretching usually at 75 to 150°C, preferably 80 to 140°C, for a stretch ratio of usually 2.5 to 6.0 times, preferably 3.0 to 5.0 times, thereby obtaining a biaxially oriented film. A tenter type stretching machine can be used for this stretching.

The said one-direction (machine-direction) stretching can be performed in two or more stages, but in this case, also, it is preferable that the final stretch ratio falls within the above-defined range. Also, the said non-stretched sheet may be stretched biaxially at the same time to an areal stretch ratio of 7 to 30 times.

This is followed by a heat treatment which is usually conducted at 140 to 250°C under an elongation or restricted shrinkage of not more than 30% for one second to 5 minutes. After biaxial stretching, the film may be again stretched 1.05 to 2.0 times in the machine direction at 110 to 180°C, and then subjected to a heat treatment. In this case, it is also possible to incorporate if desired such steps as heat setting before longitudinal re-stretching, longitudinal relaxing after longitudinal re-stretching, and small-ratio longitudinal stretching before or after longitudinal re-stretching. Re-stretching in the transverse direction may also be conducted in the similar way.

The present inventors have found that in case where the coating layer is provided before the heat treatment in a tenter, the surface resistivity of the coated side of the final film is reduced, that is, the antistatic treatment is made more effective, by successively lowering the heat treatment temperature. The preferred heat treatment temperature is 140 to 235°C, more preferably 140 to 215°C.

For forming a coating layer on the polyester film, it is possible to use various coating means such as reverse roll coater, gravure coater, rod coater, air doctor coater, illustrated in Y. Harasaki: Coating System, Maki Shoten, 1979. In the present invention, the film coated by such coating means is usually stretched in at least one axial direction after coating, preferably it is stretched in at least one axial direction before coating and further stretched in at least one axial direction after coating. If the film is not stretched after coating, the adhesive force between the polyester film and the formed coating layer is weak, and there may not be obtained enough adhesiveness for practical use.

For the above reason, and also for making this film producing process an industrially advantageous one, it is preferable to provide a coating layer in the process of producing the microcellular polyester film of the present invention. In this case, it is preferred in terms of production cost to use a method in which in the film forming step, a coating layer is formed on the film which has been monoaxially stretched in the machine direction, then after drying or in a still undried state, the film is further stretched in the direction orthogonal to the initial monoaxial stretching direction and then subjected to a heat treatment.

In case where an antistatic coat is provided on one side alone of the film, a coat of different nature may be formed on the opposite side to afford additional properties to the polyester film of the present invention. A chemical treatment or discharge treatment may be applied on the film before coating for improving coating properties of the coating solution and adhesiveness of the coat to the film. Such treatment may be applied after forming the coat for further improving the surface properties of the microcellular polyester film of the present invention.

The thickness of the said microcellular polyester film usually falls within the range of 20 to 300 µm, preferably 25 to 250 µm. In the case of the laminated film having a layer containing no microcells, it is preferable that the thickness of the microcellular layer accounts for not less than 20% of the whole thickness of the film. When the thickness of the microcellular layer is less than 20%, it may be hardly possible to realize the lightweight and cushioning properties that feature the microcellular polyester film of the present invention.

The thickness of the coat layer is usually in the range of 0.01 to 0.5 µm, preferably 0.02 to 0.3 µm in terms of final dry thickness. When the coat thickness is less than 0.01 µm, the antistatic effect may be insufficient, and when the coat thickness exceeds 0.5 µm, the produced film tends to have a blocking tendency, and especially in case where the film coated for the purpose of increasing the film strength is restretched, the film becomes liable to adhere to the rolls in the film producing procedure. The problem of blocking is prominent especially in case where a same antistatic layer is provided on both sides of the film.

In the present invention, in order to enhance the whiteness of the microcellular polyester film and reduce the amount of the expensive fluorescent brightening agent used, the antioxidant as defined in claim 1 is added to the raw materials. The "antioxidant" described herein means those capable of preventing the polymers from being oxidized and deteriorated in properties due to heat and oxygen generated upon radical catch or decomposition of peroxides at the extrusion step (step of melting and kneading the raw materials) for the production of the film according to the present invention. Specific examples of the antioxidants exhibiting an oxidation-inhibiting effect even when used singly, may include phenol-based antioxidants and amine-based antioxidants. The use of the amine-based antioxidants tends to cause considerable discoloration of the obtained films. Therefore, the use of the phenol-based antioxidants is preferred.

Examples of the phenol-based antioxidants include monophenols such as butylhydroxytoluene, 2,4,6-tri-t-butyl phenol, 2,6-di-t-butyl-4-hydroxymethyl phenol, 2-t-butyl-6-(3'-t-butyl-5'-methyl-2'-hydroxybenzyl)-4-methylphenyl acrylate and 3,5-di-t-butyl-4-hydroxybenzyl phosphonate diethyl ester; polyhydroxybenzens such as octyl gallate and lauryl gallate; bisphenols such as 2,2'-methylene-bis(4-methyl-6-t-butyl phenol) and 2,2'-methylene-bis(4-ethyl-6-t-butyl phenol); trisphenols such as 1,3,5-trimethyl-2,4,6-tris(3,5-di-t-butyl-4-hydroxybenzyl) benzene; tetrakisphenols such as tetrakis[methylene-3-(3',5'-di-t-butyl-4-hydroxyphenyl)propionate]methane. These phenol-based antioxidants have a molecular weight of preferably not less than 230, more preferably not less than 250; and a melting point of preferably not less than 100°C, more preferably not less than 120°C. The use of such antioxidants having a larger molecular weight and a higher melting point is preferred, since the heat resistance (sublimation resistance) of the antioxidants themselves is increased.

Further, as those capable of enhancing an oxidation-inhibiting effect of the phenol-based antioxidant when used in combination therewith, there may be exemplified phosphorus-based antioxidants such as triphenyl phosphite and sulfur-based antioxidants such as dilauryl 3,3'-thiodipropionate.

The antioxidant content (A₀) in the film as the total amount of antioxidants contained therein is 1 to 10,000 ppm, more preferably 5 to 5,000 ppm, still more preferably 10 to 1,000 ppm. The relationship between the antioxidant content (A₀) and the content (Aₙ) of the thermoplastic resin incompatible with polyester is represented by the formula: preferably 2·Aₙ×10⁻⁵≤A₀≤Aₙ×10⁻², more preferably Aₙ×10⁻⁴≤A₀≤5·Aₙ×10⁻³. When the antioxidant content (A₀) is less than the above value, the oxidation-inhibiting effect becomes insufficient, and the whiteness of the obtained film tends to be deteriorated. When the antioxidant content (A₀) is more than the above value, the oxidation-inhibiting effect is already saturated, and there will rather arise additional problems such as surging within the extruder.

In the present invention, the addition of the antioxidant can be performed by kneading the antioxidant in raw resins used (master batch method) or by charging the antioxidant together with the polyester and incompatible resin into the extruder (direct addition method). Among these methods, the direct addition method is preferred in view of simplified process and reduced costs of raw materials.

Thus, the present inventors have found that when the antioxidant is added to the raw resins together with the antioxidant and nonionic surfactant by the direct addition method, the oxidation-inhibiting effect can be remarkably enhanced and the obtained microcellular polyester film exhibits a considerably high whiteness.

Conventionally, it is known that the nonionic surfactant is blended into the raw materials in the extruding and kneading step for allowing, for example, polypropylene dispersed in the polyester to be uniformed and reduced in dispersing diameter thereof, and after the formation of cells in the stretching step, finally obtaining a film having desired density and cushioning property. It is considered that the nonionic surfactant acts on an interface between the polyester and polypropylene in the extruding step (step of melting and kneading the raw materials), thereby increasing the compatibility therebetween and providing such an effect that a dispersing particle diameter of the polypropylene serving as core of each cell formed in the film becomes more uniform and finer.

Further, in addition to the above effect, it has also been recognized that the nonionic surfactant allows the antioxidant added therewith to act on the polypropylene more effectively.

Silicone-based surfactants are used according to the invention. More specifically, organopolysiloxane-polyoxyalkylene copolymers or alkenyl siloxanes having polyoxyalkylene side chains are especially preferred because of higher surface-activating effect thereof.

From the conception to obtain the fine images in use of the microcellular polyester film as a base of image receiving paper, it is preferable that the film is white in color and has a high degree of opacifying power. In order to provide such properties, a fluorescent brightener is contained in the film. It is also effective to concurrently use for further elevating whiteness of the film.

In the present invention, it is possible to use any type of fluorescent brightener as far as it has a peak of fluorescence at a wavelength of 400 to 700 nm, but the following commercial products are cited as preferred examples: Uvitex OB (Ciba-Specialty Chemicals), OB-1 (Eastman Chemical) and Mikawhite (Nippon Kayaku/Mitsubishi Chemical). The content of the fluorescent brightener in the polyester film is not more than 0.3% by weight, preferably 0.01 to 0.25% by weight based on the total weight of microcellular polyester film. When its content is more than 0.3% by weight, the production cost is increased and no further effect thereby is obtained. When its content is less than 0.01% by weight, the produced film tends to lack whiteness.

The Hunter's whiteness (Wb) according to JIS P8123-1961 when five microcellular polyester films are stacked, of the microcellular polyester film is not less than 83. When the Hunter's whiteness is less than 83, the image receiving paper using the film may be lack of fine images (color tone) and the high quality may be deteriorated. The Hunter's whiteness of the microcellular polyester film is preferably not less than 88, more preferably not less than 90.

Regarding whiteness of the microcellular polyester film, the "b" value defined by JIS Z-8722 and Z-8730 can be used as an index. Specifically, it is preferable that the "b" value determined with a 5-piece stack of the film falls within the range of +1.0 to -10. When the "b" value is greater than +1.0, the film assumes a strong yellowish tint, which tends to impair the sense of fine quality of (the received image on) the film as an image receiving paper base. On the other hand, when the "b" value is less than -10, the film has a bluish tint, which tends to cause a change in coloration of the received image. The more preferred range of "b" value is from -1.0 to -8.0, even more preferably from -3.0 to -6.0.

The microcellular polyester film preferably have a coating layer. In the present invention, such a coating layer may be provided either on one side alone or on both sides of the polyester film, but it is preferred to apply an antistatic coating on both sides of the film for eliminating the blocking tendency of the image receiving paper for video printer.

The film of the present invention, by making use of its characteristic properties, can be used either in the form of a single microcellular film or a laminate with other materials such as paper, synthetic paper, plastic film, as image receiving paper for various types of thermal transfer printing such as video printing, labels, recording paper, posters, mount for seal prints, planographic plates, packaging materials, tags.

According to the present invention, it is possible to provide a microcellular polyester film having excellent antistatic properties and conveyance properties and capable of forming a beautiful high-quality transfer image in use as a base of image receiving paper. Thus, the present invention is of very high industrial value.

### EXAMPLES

The present invention is described in further detail with reference to the examples thereof, which examples however are merely intended to be illustrative and not to be construed as limiting the scope of the invention in any way. The various physical properties and special qualities of the film according to the present invention were determined and defined as described below. In the following Examples and Comparative Examples, all "parts" and "%" are by weight unless otherwise noted.

### (1) Melt-flow-index (MFI (g/10 min.))

The melt-flow-index was measured at 230°C under 21.2 N, according to JIS K7210-1995.

### (2) Average particle size

Using a centrifugal precipitation type particle size distribution meter SA-CP3 mfd. by Shimadzu Corp., the size (diameter) of the particles was determined by the precipitation method according to the Stokes' law. The value at 50% integration (volume standard) in the equivalent sphericity distribution of the particles obtained from the said determination was shown as the average particle size.

### (3) Apparent density (g/cm³)

A 10 cm × 10 cm square sample was cut out from a randomly selected part of the test film and the thickness at 9 spots of the sample film was measured uniformly by a micrometer. The weight per unit volume of the sample film was calculated from the average of 9 measurements of thickness and the weight of the film and expressed here as apparent density. Measurement was made on 5 samples and the average of 5 measurements was used.

### (4) Hunter's whiteness

The Hunter's whiteness value of a 5-piece stack of the film was determined according to the method of JIS P8123-1961 using a colorimeter NDH-1001DP (C light source; field of view: 2°) mfd. by Nippon Denshoku Kogyo KK.

### (5) "b" value

The "b" value of a 5-piece stack of the film was determined according to the method of JIS Z-8722 and 8730 using a colorimeter NDH-1001DP (C light source; field of view: 2°) mfd. by Nippon Denshoku Kogyo KK.

### (6) Glossiness (%)

Light was applied in the machine direction of the film surface and glossiness was measured according to JIS Z-8741-1983 Method 3 (60° glossiness). The measured side corresponded to the cast side (the side contacting the casting rolls). The number of measurements (n) was 3, and the average of 3 measurements was computed.

### (7) Center-line average surface roughness Ra (µm)

This was measured by a universal surface shape meter SE-3F mfd. by Kosaka Kenkyusho Ltd. Measurement was made 12 times under the following conditions. The average of 10 measurements, with two extreme measurements discarded, was taken.

### Measuring conditions

Feeler end diameter: 2 µm
Measuring force: 0.03 gf
Measuring length: 2.5 mm
Cut-off: 0.8 mm

### (8) Surface resistivity

The sample film coated with an image receiving layer was set in a concentric circular electrode assembly 16008A (trade name) mfd. by Yokokawa Hewlet Packard, Ltd. (inner electrode: 50 mmφ; outer electrode: 70 mmφ) under the conditions of 23° and 50% RH. A voltage of 100 V was applied to the electrode assembly and the surface resistance of the sample film was measured by a high resistance meter 4339B (trade name) of the same company.

### (9) Film-forming properties (Film break)

The amorphous sheet was stretched in the machine direction and then stretched in the transverse direction by a transverse stretcher (tenter), and the condition of break of the film during transverse stretching or heat setting was observed and evaluated according to the following ranking criterion.
○: Almost no film break took place, and film productivity was good.
Δ: Film break took place occasionally, and film productivity was poor.
X: Film break took place frequently, and film productivity was very bad.

### (10) Printed image quality

A coating material of the following composition:
Polyester "Vyron 600" produced by Toyo Boseki Co., Ltd.) 62 parts by weight
Vinyl chloride-acetate "VYHH" produced by UCC Inc. 26 parts by weight
Amino-modified silicone "KF-393" produced by Shin-Etsu
Chemical Co., Ltd. 6 parts by weight
Epoxy-modified silicone "X-22-343" produced by Shin-Etsu Chemical Co., Ltd. 6 parts by weight
was dissolved in a methanol/methyl ethyl ketone/dimethylformamide mixed solvent to form a 20 wt% coating solution, and this coating solution was applied on the sample film to a coating thickness after drying of 5 µm to form an image receiving layer.

An image was printed on the image receiving layer of the film by a video printer "NV-MP10" mfd. by Matsushita Electric Co., Ltd. , and the condition of the image was examined and rated according to the following criterion.
○: The image had high quality.
Δ: Part of the image was slightly unclear.
X: The image was unclear and partly chipped.

### (11) Conveyance properties of image receiving paper

In the printing test in (8) above, the frequency at which the films loaded in a stack were conveyed in a mass with one lying over another was checked and rated as follows: X: 5 times or more; Δ : 2 to 4 times; ○: only once; ⊚: none at all, during 50 rounds of paper feed.

### Example 1 (Ref.):

To the polyethylene terephthalate chips having an inherent viscosity of 0.64 were blended 13% by weight of crystalline polypropylene chips having a melt flow index of 10 g/10 min. To this mixture were further added uniformly 5.0% by weight of titanium oxide particles having an average particle size of 0.3 µm, 0.05% by weight of fluorescent brightener (Eastman Kodak's OB-1) and 0.10% by weight of a silicone-based surface active agent (Toray Dow Corning Silicone's SH193) to prepare a starting material A.

The said material A was directly supplied into a double-screw extruder, melted at 270°C and kneaded, and the resulting melt was led into a die, extruded slit-wise therefrom and cooled on a 30°C cooling drum to obtain a non-stretched sheet. This non-stretched sheet was stretched 3.4 times in the machine direction at 80°C, and then a coating solution of the composition shown in Table 1 (a 5 wt% water dispersion) was coated on both sides of the obtained film to a coating thickness (wet) of 4.5 µm. This film was further stretched 3.9 times in the transverse direction at 125°C and then heat treated at 227°C for 20 seconds to obtain a biaxially oriented film with a final thickness of 188 µm.

The physical properties and the results of evaluation of special qualities of the obtained film are shown in Table 2.

### Examples 2 to 6: (Ref.)

The same procedure as defined in Reference Example 1 was conducted except that the coating solution composition and the heat treatment temperature were changed as shown in Table 1 to obtain the 188 µm thick biaxially oriented films.

### Comparative Example 1 and 2:

The same procedure as defined in Reference Example 1 was conducted except that the material formulation was changed as shown in Table 1 to obtain the 188 µm thick biaxially oriented films. In Comparative Example 2, film break took place frequently and it was impossible to obtain a coated film.

### Example 7 (Ref.):

The same procedure as defined in Reference example 1 was conducted except that a coat was formed on one side alone of the film to obtain a 188 µm thick biaxially oriented film. Printability evaluation was made by providing an image receiving layer on the coated side of the film.

### Example 8 (Ref.):

The same procedure as defined in Reference Example 1 was conducted except that the material A and polyethylene terephthalate with an inherent viscosity of 0.60 containing 0.25% by weight of calcium carbonate with an average particle size of 0.3 µm (material B) were coextruded in a manner to produce a B/A/B multi-layer film construction to obtain a biaxially oriented film having a final thickness profile of 2/184/2 µm.

The film-forming properties and special qualities of the obtained microceullular films are shown in Table 2.

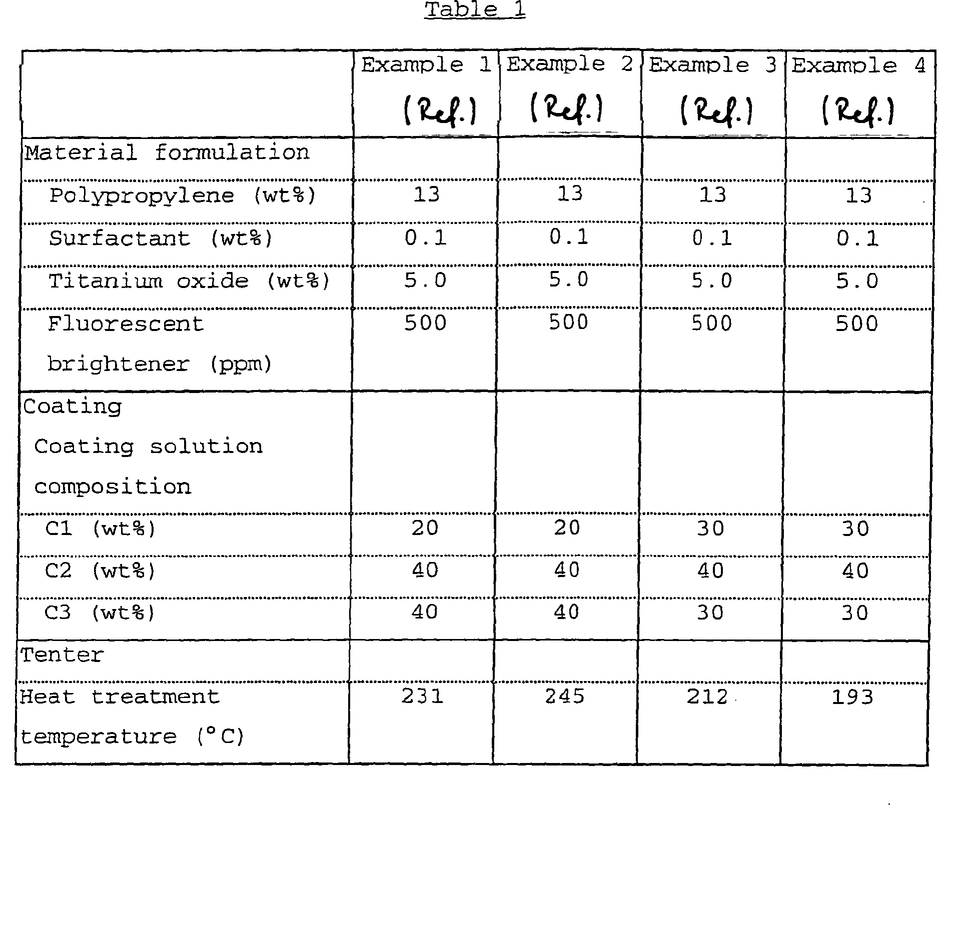

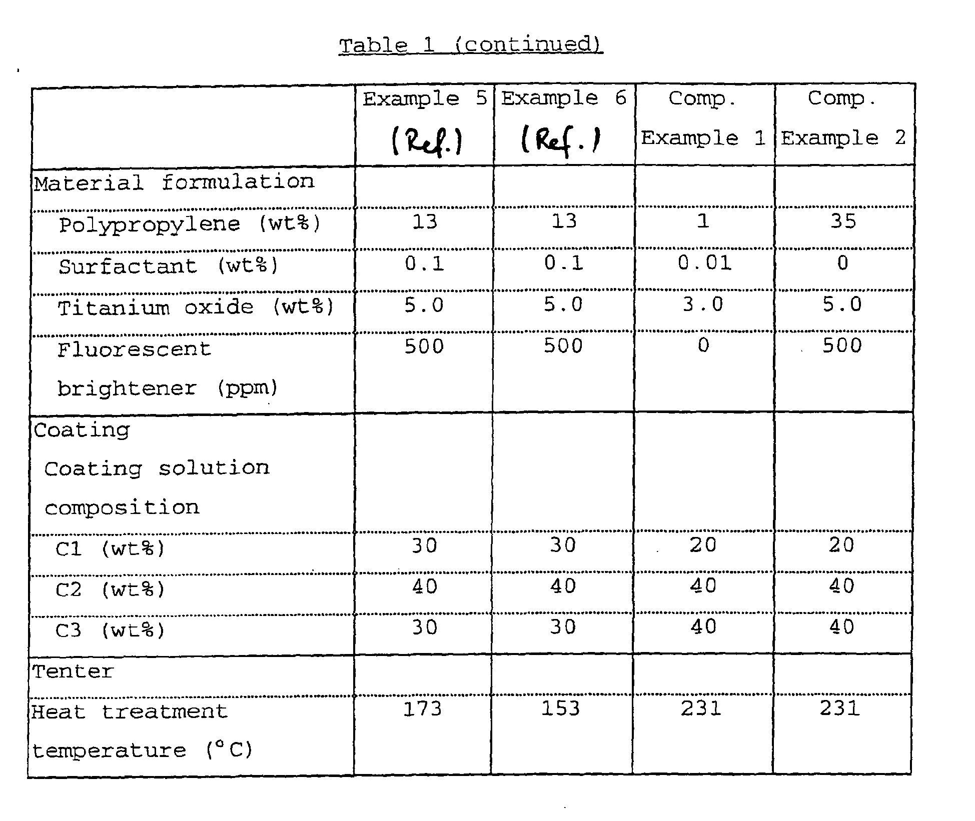

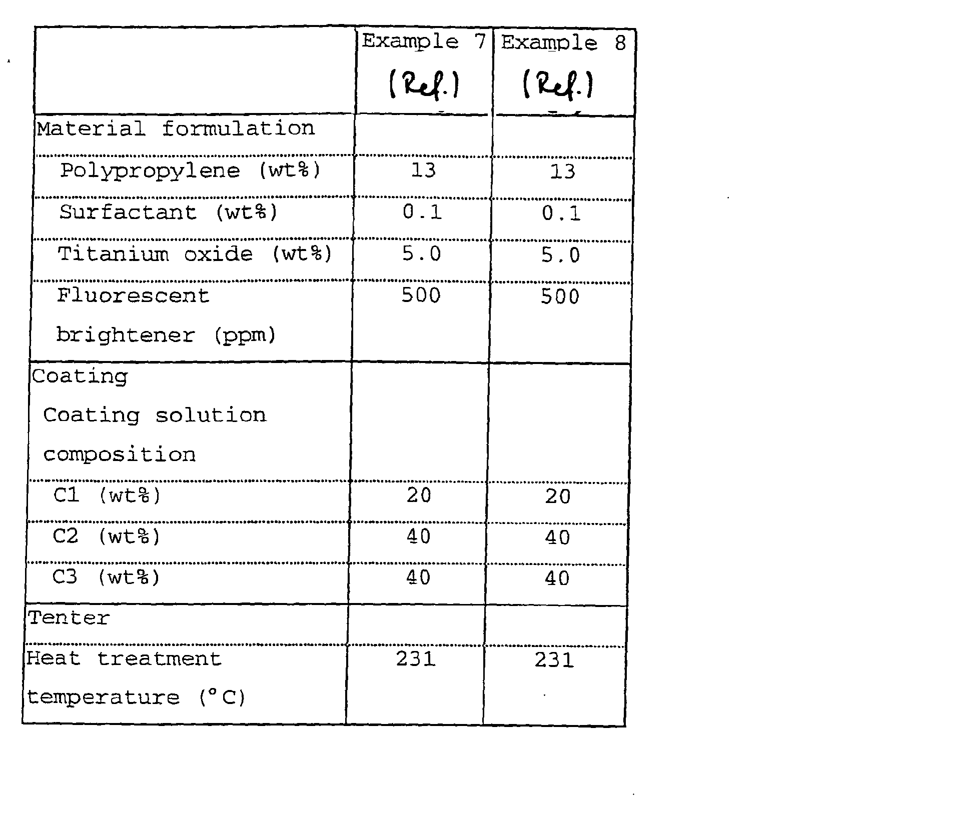

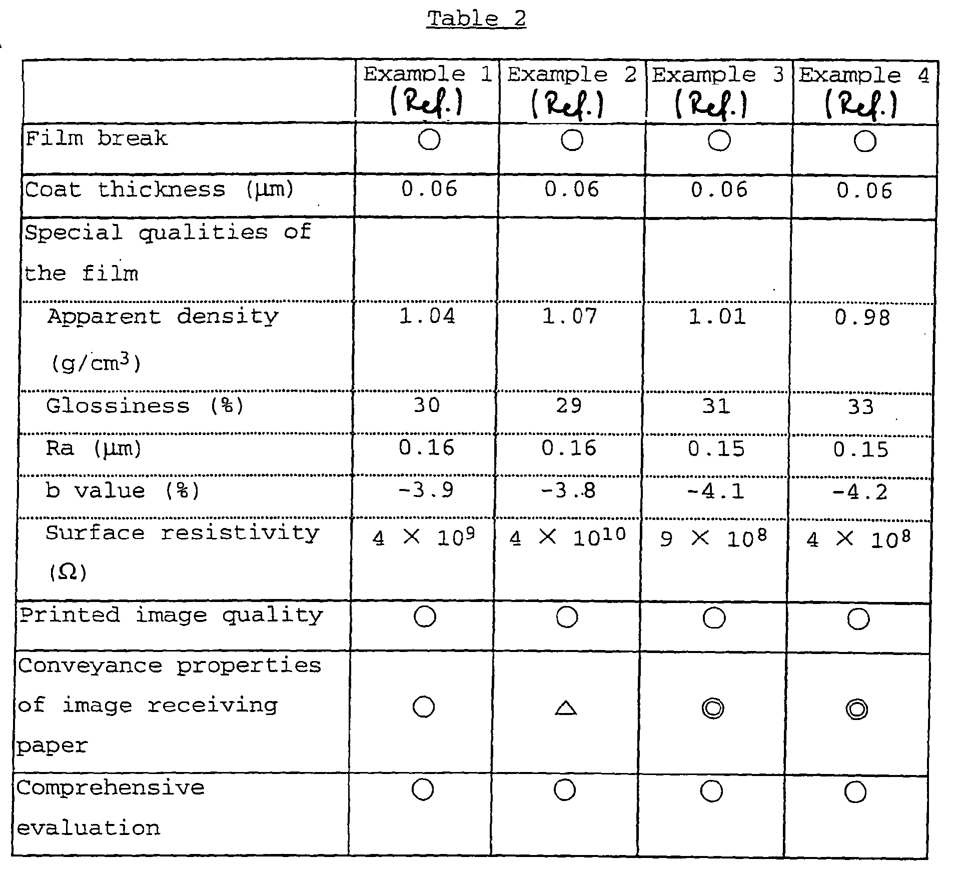

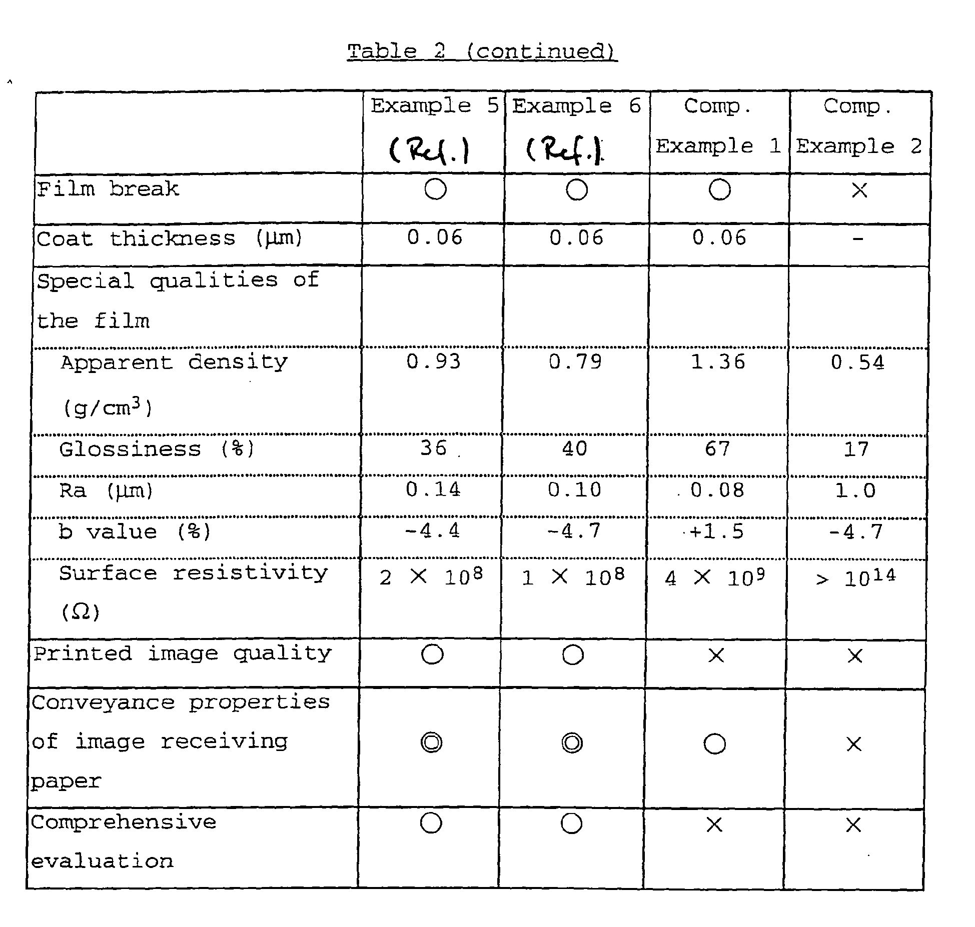

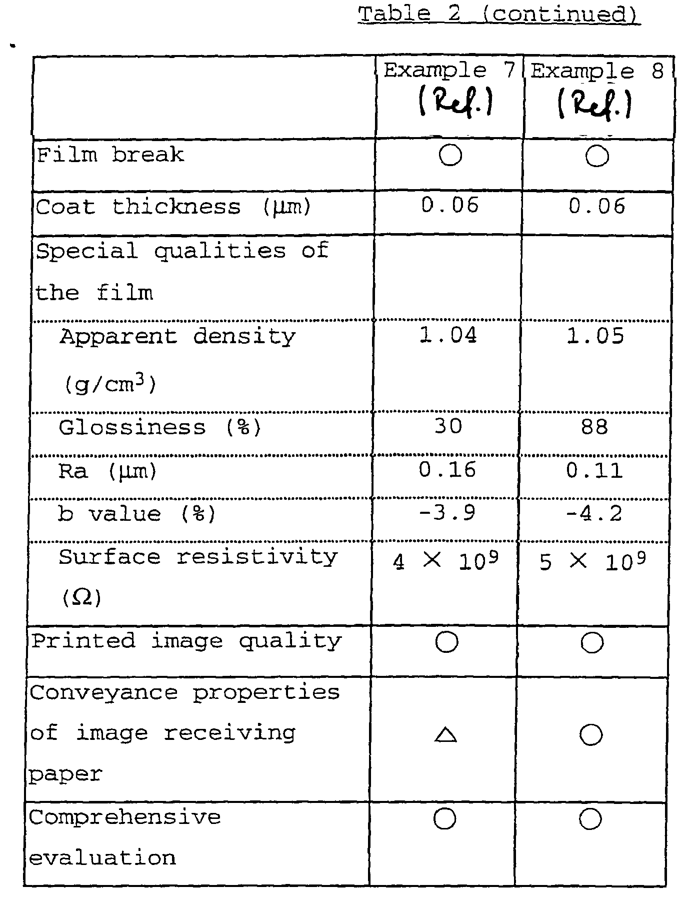

In the coating solution composition in Table 1, C1 indicates polydimethyldiallylammonium chloride (molecular weight = 30,000), C2 indicates a nonionic water dispersion of methyl methacrylate/ethyl acrylate/methylolacrylamide copolymer (monomer ratio: 47.5/47.5/5 mol%), and C3 indicates an aqueous methoxymethylmelamine solution.

In Table 1, the values of the material formulation of Reference Example 8 are those of the intermediate layer.

### Example 9:

A raw blend (C) mainly containing polyethylene terephthalate chips having an intrinsic viscosity of 0.65 and further containing crystalline polypropylene chips having a melt flow index of 7.6 g/10 min. (15 %), titanium oxide particles having an average particle diameter of 0.3 µm (2.4 %), a fluorescent brightening agent OB-1 produced by Eastman Kodak Corp. (0.07 %), a silicone-based surfactant SH193 produced by Toray Dow Corning Silicone Co., Ltd. (0.12 %) and an antioxidant (0.03 %) (the percentages based on the total amount of the raw materials), was directly charged into a vented double-screw extruder, and melt-kneaded at 270°C therein. The resultant melt was extruded through a slit-like opening of an extrusion die, and the extruded sheet was cooled on a cooling drum maintained at 25°C, thereby obtaining an unstretched sheet.

Then, the obtained unstretched sheet was stretched 3.4 times in the longitudinal direction at 82°C. Thereafter, the thus stretched sheet was coated with a coating solution (5 wt% aqueous dispersion) as shown below to form a coating layer having a (wet) thickness of 4.5 µm on each surface thereof. The coated sheet was stretched 4.1 times in the transverse direction at 123°C, and heat-treated at 232°C for 6 seconds, thereby finally obtaining a biaxially oriented film having a thickness of 75 µm.

### Antioxidant used in raw blend (C):

Irganox 1222 produced by Ciba-Geigy Corp. (3,5-di-t-butyl-4-hydroxybenzyl phosphonate-diethyl ester; molecular weight: 356; melting point: 120°C)

### Composition of coating solution:

20 % of polydimethyldiaryl ammonium chloride (molecular weight: 30,000); 40 % of methyl methacrylate/ethyl acrylate/methylol acrylamide copolymer (ratio between monomers: 47.5/47.5/5 mol%); and 40 % of methoxymethyl melamine

### Example 10:

The same procedure as defined in Example 9 was conducted except that Yoshinox BHT produced by Yoshitomi Seiyaku Co., Ltd. (butylhydroxy toluene; molecular weight: 220; melting point: 70°C (sublimable)) was used as the antioxidant, thereby obtaining a biaxially oriented film having a thickness of 75 µm .

### Example 11:

The same procedure as defined in Example 9 was conducted except that the antioxidant was blended in an amount of 90 ppm, thereby obtaining a biaxially oriented film having a thickness of 75 µm.

### Example 12:

The same procedure as defined in Example 9 was conducted except that no silicone-based surfactant was blended, thereby obtaining a biaxially oriented film having a thickness of 75 µm.

### Example 13:

The same procedure as defined in Example 9 was conducted except that no fluorescent brightening agent was blended, thereby obtaining a biaxially oriented film having a thickness of 75 µm.

### Comparative Example 3:

The same procedure as defined in Example 9 was conducted except that neither antioxidant nor fluorescent brightening agent was blended, thereby obtaining a biaxially oriented film having a thickness of 75 µm.

### Comparative Example 4:

The same procedure as defined in Comparative Example 3 was conducted except that the fluorescent brightening agent was blended in an amount of 0.35 %, thereby obtaining a biaxially oriented film having a thickness of 75 µm.

The film-forming properties and special qualities of the obtained microceullular films are shown in Table 4.

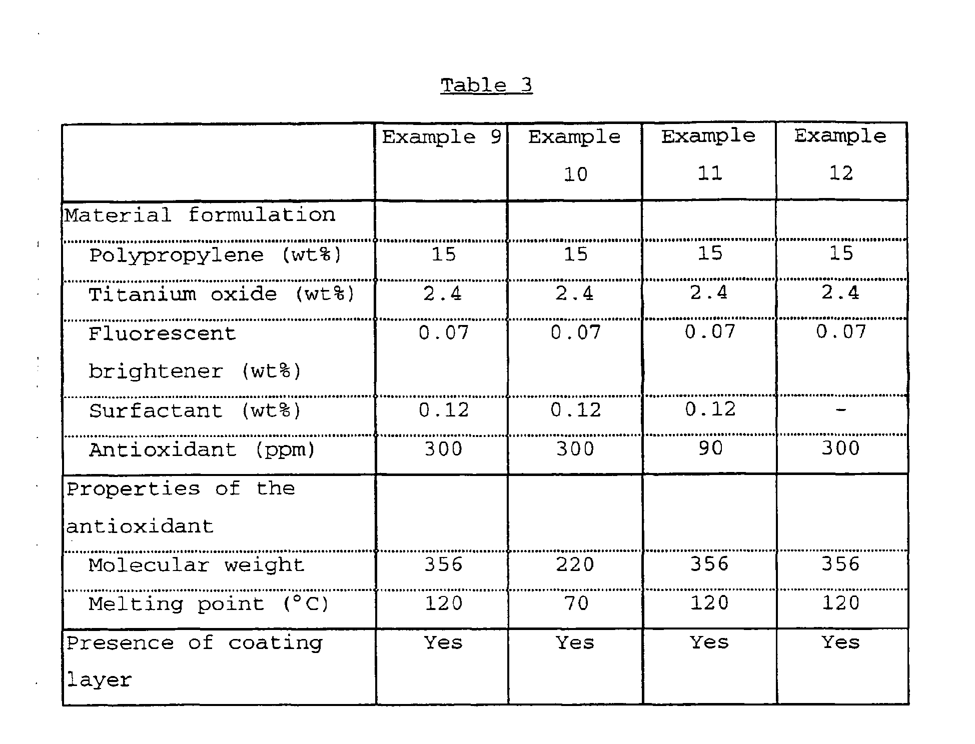

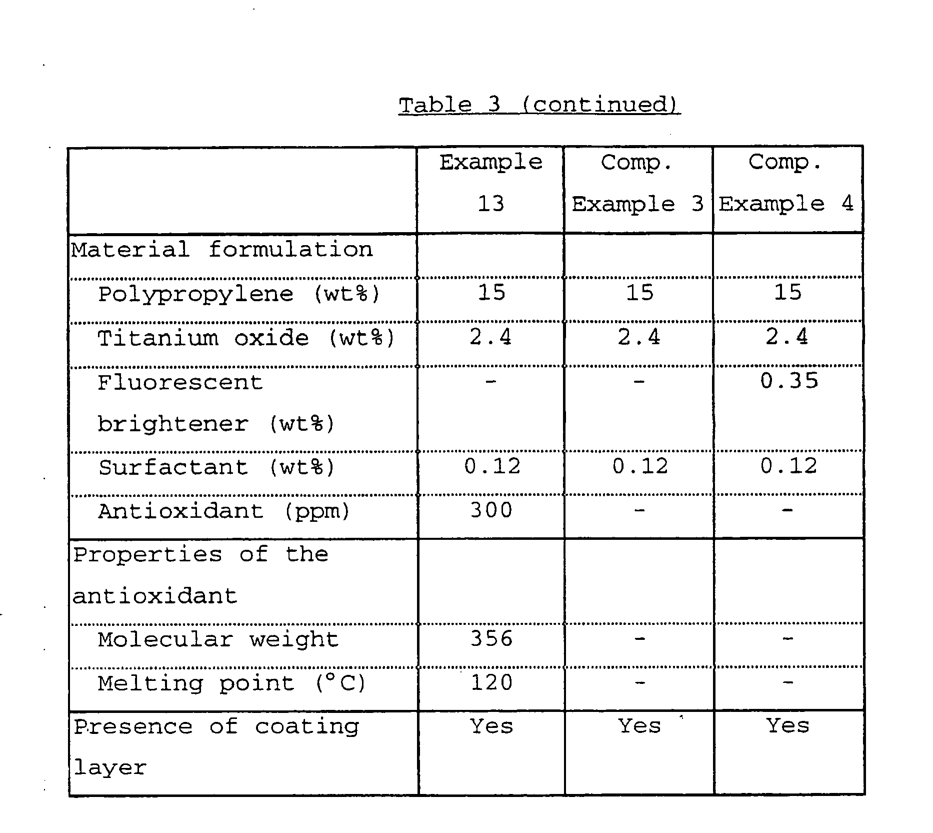

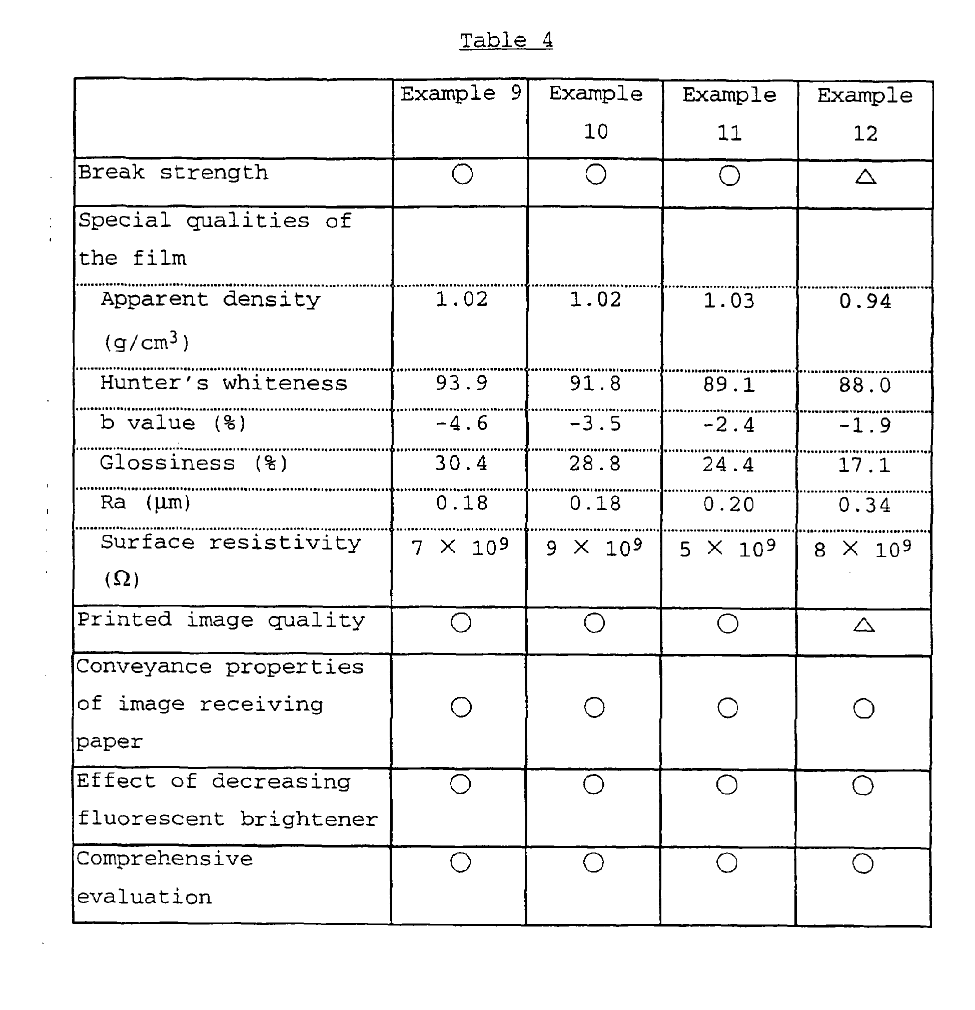

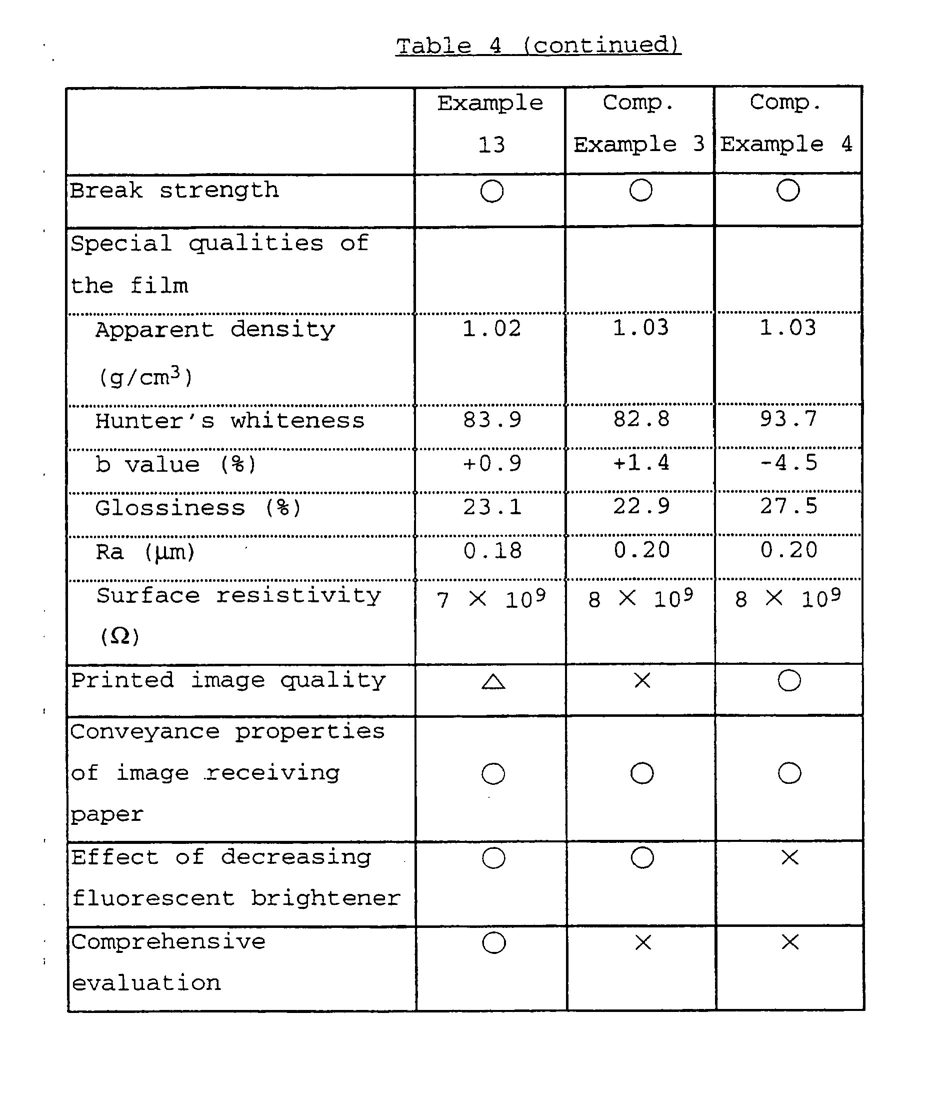

## Claims

1. A microcellular polyester film which comprises:
a polyester,
2 to 30% by weight of a thermoplastic resin incompatible with the polyester,
not more than 0.3% by weight of fluorescent brightener based on the total weight of said polyester film,
an antioxidant in an amount of 1 to 10000 ppm based on the total weight of said polyester film and
a nonionic silicone-based surfactant in an amount of 0.002AN≤As≤0.2An wherein As (wt%) is the content of the surfactant in the microcellular polyester film and An (wt%) is the content of the thermoplastic resin incompatible with the polyester, and
which has an apparent density of 0.60 to 1.35 g/cm³ and Hunter's whiteness of not less than 83.

2. A process for producing a microcellular polyester film which film comprises a polyester, 2 to 30% by weight of a thermoplastic resin incompatible with the polyester, not more than 0.3% by weight of fluorescent brightener based on the total weight of said polyester film, an antioxidant in an amount of 1 to 10000 ppm based on the total weight of said polyester film and a nonionic surfactant, and which film has an apparent density of 0.60 to 1.35 g/cm³ and Hunter's whiteness of not less than 83, which process comprises supplying the antioxidant and nonionic surfactant directly into an extruder together with the polyester and the thermoplastic resin incompatible with the polyester.

3. An image receiving paper for video printers comprising the microcellular polyester film of claim 1 as a base.

4. An image receiving paper for video printers comprising the microcellular polyester film as a base obtainable by the process as defined in claim 2.

## Patentansprüche

1. Mikrozelluläre Polyesterfolie, welche umfasst:
Polyester,
2 bis 30 Gew.-% thermoplastisches Harz, welches mit dem Polyester inkompatibel ist,
nicht mehr als 0,3 Gew.-% fluoreszierenden Aufheller, auf der Basis des Gesamtgewichts der Polyesterfolie,
Antioxidationsmittel in einer Menge von 1 bis 10.000 ppm, auf der Basis des Gesamtgewichts der Polyesterfolie, und
nichtionisches Silicon-basiertes Tensid in einer Menge von 0,002An_<Ass 0,2An, worin As (Gew.-%) die Menge des Tensids in der mikrozellulären Polyesterfolie darstellt und An (Gew.-%) die Menge des thermoplastischen Harzes, welches mit dem Polyester inkompatibel ist, darstellt und
welche eine Fülldichte von 0,60 bis 1,35 g/cm³ und eine Weißheit nach Hunter von nicht weniger als 83 aufweist.

2. Verfahren zur Herstellung einer mikrozellulären Polyesterfolie, wobei die Folie Polyester, 2 bis 30 Gew.-% thermoplastisches Harz, welches mit dem Polyester inkompatibel ist, nicht mehr als 0,3 Gew.-% fluoreszierenden Aufheller, auf der Basis des Gesamtgewichts der Polyesterfolie, Antioxidationsmittel in einer Menge von 1 bis 10.000 ppm, auf der Basis des Gesamtgewichts der Polyesterfolie, und nichtionisches Tensid umfasst und welche eine Fülldichte von 0,60 bis 1,35 g/cm³ und eine Weißheit nach Hunter von nicht weniger als 83 aufweist, wobei das Verfahren das Zuführen des Antioxidationsmittels und des nichtionischen Tensids direkt in einen Extruder zusammen mit dem Polyester und dem thermoplastischen Harz, welches mit dem Polyester inkompatibel ist, umfasst.

3. Bildaufnahmepapier für Videodrucker, umfassend die mikrozelluläre Polyesterfolie nach Anspruch 1 als Basis.

4. Bildaufnahmepapier für Videodrucker, umfassend die mikrozelluläre Polyesterfolie als Basis, welche gemäß dem Verfahren nach Anspruch 2 erhältlich ist.

## Revendications

1. Film de polyester microcellulaire qui comprend :
- un polyester,
- 2 à 30% en poids d'une résine thermoplastique incompatible avec le polyester, au plus 0,3% en poids d'un agent éclaircissant fluorescent par rapport au poids total dudit film de polyester,
- un antioxydant en une quantité comprise entre 1 et 10 000 ppm par rapport au poids total dudit film de polyester et
- un tensioactif non ionique à base de silicone en une quantité de 0,002 Aₙ ≤ Aₛ ≤ 0,2 Aₙ où Aₛ (% en poids) est la teneur du tensioactif dans le film de polyester microcellulaire et Aₙ (% en poids) est la teneur de la résine thermoplastique incompatible avec le polyester, et
- qui a une densité apparente comprise entre 0,60 et 1,35 g/cm³ et un indice de blancheur Hunter d'au moins 83.

2. Procédé de production d'un film de polyester microcellulaire, lequel film comprend un polyester, 2 à 30% en poids d'une résine thermoplastique incompatible avec le polyester, au plus 0,3% en poids d'un agent éclaircissant fluorescent par rapport au poids total dudit film de polyester, un antioxydant en une quantité comprise entre 1 et 10 000 ppm par rapport au poids total dudit film de polyester et un tensioactif non ionique, et lequel film a une densité apparente comprise entre 0,60 et 1,35 g/cm³ et un indice de blancheur Hunter d'au moins 83, lequel procédé consiste à introduire l'antioxydant et le tensioactif non ionique directement dans une extrudeuse conjointement avec le polyester et la résine thermoplastique incompatible avec le polyester.

3. Papier de réception d'images pour imprimantes vidéo comprenant en tant que base le film de polyester microcellulaire selon la revendication 1.

4. Papier de réception d'images pour imprimantes vidéo comprenant le film de polyester microcellulaire en tant que base pouvant être obtenu à l'aide du procédé tel qu'il est défini dans la revendication 2.
